# EUROPÄISCHE PATENTSCHRIFT

(11) **EP 1 210 471 B1**
(45) Veröffentlichungstag und Bekanntmachung des Hinweises auf die Patenterteilung: **22.11.2006**
(21) Anmeldenummer: 00954652.4
(22) Anmeldetag: 24.08.2000
(51) Int. Cl.: C25C 3/02, C25C 7/04

(54) **VERFAHREN ZUR ELEKTROCHEMISCHEN HERSTELLUNG EINES ALKALIMETALLS AUS WÄSSRIGER LÖSUNG**
METHOD FOR ELECTROCHEMICALLY PRODUCING AN ALKALI METAL FROM AN AQUEOUS SOLUTION
PROCEDE DE PREPARATION ELECTROCHIMIQUE D'UN METAL ALCALIN A PARTIR D'UNE SOLUTION AQUEUSE

(30) Priorität: 24.08.1999 DE 19940069
(43) Veröffentlichungstag der Anmeldung: 05.06.2002
(73) Patentinhaber: BASF Aktiengesellschaft, 67056 Ludwigshafen (DE)
(72) Erfinder: PÜTTER, Hermann, D-67433 Neustadt (DE); HUBER, Günther, D-67071 Ludwigshafen (DE); SCHIERLE-ARNDT, Kerstin, D-68219 Mannheim (DE); SCHLÄFER, Dieter, D-67071 Ludwigshafen (DE); GUTH, Josef, D-67251 Freinsheim (DE)
(74) Vertreter: Isenbruck, Günter
(86) Internationale Anmeldenummer: PCT/EP2000/008278
(87) Internationale Veröffentlichungsnummer: WO 2001/014616

(56) Entgegenhaltungen:
- EP-A- 0 835 951
- DE-A- 3 203 515

## Beschreibung

Die vorliegende Erfindung betrifft ein elektrochemisches Verfahren zur Gewinnung von Alkalimetallen aus wäßriger Lösung durch einen elektrochemischen Prozeß, sowie eine Elektrolysezelle zur Durchführung dieses Verfahrens. Weiterhin betrifft die Erfindung ein elektrochemisches Verfahren zum Recycling von Alkalimetallen aus wäßriger Lösung.

Der Begriff "Alkalimetall", wie er im Rahmen dieser Erfindung verwendet wird, bezeichnet Lithium, Natrium und Kalium.

Lithium ist eine wichtige anorganische Grundchemikalie und wird in einer Reihe von Anwendungen eingesetzt. So wird es zur Darstellung von Organolithiumverbindungen, als Legierungszusatz zu Aluminium oder Magnesium und für Lithiumbatterien verwendet. Technisch wird Lithium durch Schmelzflußelektrolyse eines eutektischen Gemischs von Lithiumchlorid und Kaliumchlorid bei 400 bis 460 °C hergestellt. (Ullmann's Encyclopedia of Industrial Chemistry, Sixth Edition, 1998 Electronic Release). Dieser Prozeß hat einen hohen Energieverbrauch (28-32 kWh/kg Li). Außerdem hat das Verfahren den gravierenden Nachteil, daß nur wasserfreies Lithiumchlorid eingesetzt werden kann. Das primär als wäßrige Lösung vorliegende Lithiumchlorid muß deshalb in einem energieaufwendigen Verfahren zum wasserfreien Feststoff aufgearbeitet werden. Da Lithiumchlorid hygroskopisch ist, erfordert die Trocknung und Handhabungen einen besonderen Aufwand.

Bei der Durchführung lithiumorganischer Reaktionen fallen häufig wäßrige Lithiumsalzlösungen an. Durch den steigenden Verbrauch an Lithiumbatterien fallen auch dort lithiumhaltige Abfälle an. Auch diese können in wäßrige Lithiumlösungen überführt werden. Da Lithium auch in Form seiner Salze sehr teuer ist, ist ein Recycling von Lithium interessant.

US 4,156,635 und J. F. Cooper et al., Proc. Electrochem. So. 1995, Seiten 95-11, 280-290, beschreiben ein Verfahren zur elektrochemischen Herstellung von Lithium aus einer wäßrigen Lithiumsalzlösung mit einer Lithium-Amalgam-Elektrode. Dabei wird eine Lithiumlösung, insbesondere eine Lithiumhydroxidlösung unter Verwendung einer Amalgamkathode elektrolysiert. Es bildet sich dabei Lithium-amalgam, das in einer zweiten Elektrolysezelle anodisch geschaltet ist. Lithiumkathode und Amalgamanode sind dabei mit Hilfe von Bornitriddichtungen getrennt. In dieser zweiten Elektrolysezelle dient eine 2 cm-Salzschmelze von zwei Alkalimetalliodiden als Elektrolyt (bevorzugt LiI und CsI bzw. LiI und KI), während kathodisch Lithiummetall abgeschieden wird. Die Stromdichte liegt dabei zwischen 1 und 4 kA/m², ohne daß eine Stofftransportlimitierung auftritt. Bei der Gewinnung des Lithiums aus dem Amalgam nach diesem Verfahren wird nur eine Stromausbeute von 81 bis 87 % erreicht. Ein besonders schwerwiegendes Problem ist, daß das gewonnene Lithium mit Quecksilber kontaminiert ist, da das Quecksilber durch den Elektrolyten diffundieren kann.

Natrium ist ein wichtiges anorganisches Grundprodukt, das beispielsweise für die Herstellung von Natriumamid, Natriumalkoholaten und Natriumborhydrid verwendet wird. Es wird technisch nach dem Downs-Prozeß durch Elektrolyse von geschmolzenem Kochsalz gewonnen. Dieser Prozeß weist einen hohen Energieverbrauch von ≥ 10 kWh/kg Natrium auf (Büchner et al., Industrielle Anorganische Chemie, 2. Auflage, Verlag Chemie, Seiten 228 ff.). Weiterhin hat das Verfahren den gravierenden Nachteil, daß die Elektrolysezellen beim Abschalten durch das Erstarren der Salzschmelze zerstört werden. Ferner hat das nach dem Downs-Prozeß gewonnene Natriummetall den Nachteil, daß es prozeßbedingt mit Calcium verunreinigt ist, dessen Restgehalt durch nachträgliche Reinigungsschritte nur vermindert, aber niemals völlig beseitigt werden kann.

Kalium ist ebenfalls ein wichtiges anorganisches Grundprodukt, das beispielsweise für die Herstellung von Kaliumalkoholaten, Kaliumamiden und Kaliumlegierungen verwendet wird. Heute wird es technisch vor allem durch Reduktion von Kaliumchlorid mit Natrium gewonnen. Dabei entsteht zunächst NaK, das im Anschluß fraktioniert destilliert wird. Eine gute Ausbeute wird dadurch erreicht, daß ständig Kaliumdampf aus der Reaktionszone abgezogen wird, wodurch das Gleichgewicht der Reaktion auf die Kaliumseite verschoben wird (Ullmann's Encyclopedia of Industrial Chemistry, 6. Auflage 1998, Electronic Release). Nachteilig ist, daß das Verfahren bei hohen Temperaturen (870 °C) arbeitet. Außerdem enthält das entstehende Kalium etwa 1 % Natrium als Verunreinigung und muß daher noch durch eine weitere Rektifikation aufgereinigt werden. Der größte Nachteil ist, daß das eingesetzte Natrium teuer ist. Dies liegt daran, daß Natrium technisch nach dem Downs-Prozeß durch Elektrolyse von geschmolzenem Kochsalz gewonnen wird, wobei ein Energieaufwand von mindestens 10 kWh/kg Natrium nötig ist. Dies entspricht etwa 5,3 kWh/kg Kalium (bei 100 % Ausbeute).

Die GB 1,155,927 beschreibt ein Verfahren, bei dem unter Einsatz eines festen Natriumionenleiters, wie z. B. β-Al₂O₃, mit Amalgam als Anode und Natrium als Kathode auf elektrochemischem Wege Natriummetall aus Natriumamalgam gewonnen werden kann. Die Ausführung des in GB 1,155,927 beschriebenen Verfahrens führt aber nicht zu den dort beschriebenen Ergebnissen hinsichtlich Natriumumsatz, Produktreinheit und Stromdichte. Ferner verhält sich das dort beschriebene System im Verlauf weniger Tage instabil, wenn der beanspruchte Temperaturbereich eingehalten wird.

Elektrolysezellen, die in einem elektrochemischen Verfahren zur Herstellung von Alkalimetall verwendet werden und einen festen Ionenleiter aufweisen, sind häufig nicht geeignet, über lange Zeit hinweg im Permanentbetrieb zu arbeiten. Ein Grund hierfür ist die mechanische Instabilität des festen Ionenleiters, die nach einer gewissen Betriebsdauer eintritt.

Es bestand deshalb die Aufgabe, ein Verfahren zu entwickeln, das die oben beschriebenen Nachteile (hoher Energieverbrauch, Calciumgehalt des Natriums, hohe Temperatur, usw.) nicht aufweist. Eine weitere Aufgabe lag in der Bereitstellung einer für die Durchführung dieser Verfahren geeigneten Elektrolysezelle. Darüber hinaus bestand die Aufgabe, ein Verfahren zu finden, das das Recycling von Alkalimetallen aus wäßrigen Alkalimetallabfällen, insbesondere Lithium aus wäßrigen Lithiumabfällen, möglich macht.

Demgemäß wurde ein Verfahren gefunden, das dadurch gekennzeichnet ist, daß man in einer erfindungsgemäßen Elektrolysezelle mit festem Ionenleiter eine Elektrolyse durchführt. Dabei trennt der Ionenleiter die Elektrolysezelle in zwei Teile. Im einen Teil befindet sich das flüssige Alkalimetall, das als Kathode geschaltet ist. Im anderen Teil befindet sich eine wäßrige Salzlösung eben dieses Alkalimetalls, die mit einer Anode in Kontakt steht. Als Anode können beliebige handelsübliche Anodenmaterialien eingesetzt werden

Häufig sind solche Alkalimetallionenleiter nicht gegen Wasser und/oder gegen Alkalimetalle stabil, so daß während des Versuchs bereits nach kurzer Zeit der Alkalimetallionenleiter zerstört wird. Bei dieser Zerstörung kann es entweder zum mechanischen Versagen des Ionenleiters oder zum Verlust der Leitfähigkeit des Ionenleiters kommen. Somit ist es ein weiteres Ziel der Erfindung, die Ionenleiter über längere Standzeiten stabil zu halten. Die Standzeit der Ionenleiter kann stark erhöht werden, indem man eine ionenleitende Schutzschicht auf die entsprechende Seite des Ionenleiters aufbringt.

Demgemäß betrifft die vorliegende Erfindung auch eine Elektrolysezelle, umfassend ein Anodenkompartiment, das eine wäßrige Lösung mindestens eines Alkalimetallsalzes umfaßt, ein Kathodenkompartiment und einen Festelektrolyten, durch den das Anodenkompartiment und das Kathodenkompartiment voneinander separiert werden, die dadurch gekennzeichnet ist, daß der Teil der Oberfläche des Festelektrolyten, der mit dem Anodenkompartiment oder gegebenfalls der Teil der Oberfläche des Festelektrolyten, der mit dem Kathodenkompartiment in Kontakt steht, mindestens eine weitere ionenleitende Schicht aufweist, wobei die mindestens eine ionenleitende Schicht, die die mit dem Anodenkompartiment in Kontakt stehende Oberfläche des Festelektrolyten aufweist, ein Polymerelektrolyt, ein keramischer Elektrolyt, eine Verbindung, die die Alkalimetallionen des mindestens einen Alkalimetallsalzes interkaliert, oder ein Gemisch aus zwei oder mehreren davon ist.

Ebenso betrifft die vorliegende Erfindung auch ein Verfahren zur Herstellung eines Alkalimetalls aus einer wäßrigen Lösung, umfassend mindestens ein Salz dieses Alkalimetalls, unter Verwendung dieser Elektrolysezelle.

Bezüglich der wäßrigen Alkalimetallsalzlösung im Anodenkompartiment bestehen im allgemeinen keine Einschränkungen, und alle geeigneten Alkalimetallsalzlösungen können verwendet werden. Neben reinen wäßrigen Lösungen können auch Gemische mit wassermischbaren organischen Lösungsmitteln eingesetzt werden, solange die organischen Lösungsmittel unter den Reaktionsbedingungen stabil sind. Beispiele derartiger Lösungsmittel sind Alkohole, wie z. B. Methanol und Ethanol, sowie Carbonate, wie z. B. Propylen- oder Ethylencarbonat.

Was die Geometrie und die Bauart des Anodenkompartiments betrifft, existieren ebenfalls keine Beschränkungen, solange gewährleistet ist, daß die Wände des Anodenraumes gegenüber der Anodenlösung stabil sind und ein so großer Teil der Oberfläche des Festelektrolyten mit dem Anodenkompartiment in Kontakt steht, daß das Verfahren zur Herstellung des Alkalimetalls durchgeführt werden kann.

Dabei wird im allgemeinen das erfindungsgemäße Verfahren so durchgeführt, daß die wäßrige alkalische Metallsalzlösung im Anodenkompartiment in Bewegung ist und die Anode in die wäßrige Lösung eintaucht. Das Bewegen der Lösung kann dabei durch beliebige Mittel hervorgerufen werden, wobei ein Rühren mit einer Rühreinrichtung oder Umpumpen bevorzugt ist.

Als Anode, die in die wäßrige Lösung eintaucht, kann jedes handelsübliche Anodenmaterial verwendet werden. Als Anodenmaterialien eignen sich beispielsweise Edelmetalle wie Platin oder Metalloxide auf Titan oder Mischoxide des Typs RuOₓTiOₓ, sowie Graphit, Kohleelektroden und Bleidioxide.

Der Anoden- und der Kathodenraum der erfindungsgemäßen Elektrolysezelle sind durch einen heliumdichten Alkalimetallionen leitenden Festelektrolyten voneinander getrennt.

Dabei erfüllen die Ionenleiter vorzugsweise folgende Bedingungen:
1. Die Ionenleiter zeigen eine gute Alkalimetallionenleitfähigkeit bei der Reaktionstemperatur (σ ≥ 0,005 S/cm).
2. Die Ionenleiter haben eine vemachlässigbar geringe Elektronenleitfähigkeit.

Für diesen Zweck kommen bei der Natriumherstellung keramische Materialien wie NASICON (Na+ super ionic conductor) in Betracht, deren Zusammensetzung im Detail in der EP-A 0 559 400 und in "A. D. Robertson, A. R. West, A. G. Ritchie, *Solid State Ionics,* 1997, 104, Seiten 1-11 und dort zitierte Literatur, insbesondere Seite 3, linke Spalte" angegeben ist. Auch Natriumionen leitende Gläser sowie Zeolithe und Feldspate sind geeignet. Bevorzugt werden Natrium-β"-Aluminiumoxid, Natrium-β-Aluminiumoxid oder Natrium-β/β"-Aluminiumoxid verwendet.

Bei der Herstellung von Kalium kommt ebenfalls eine Vielzahl von Materialien in Frage. Sowohl die Verwendung von Keramiken als auch die Verwendung von Gläsern ist möglich. Beispielsweise kommen folgende Materialien in Betracht: KBiO₃ (T. N. Nguyen et al., *Chem. Mater.,* 1993, 5, Seiten 1273-1276), Galliumoxid-Titandioxid-Kaliumoxid-Systeme (Seiten Yoshikado et al., *Solid State Ionics,* 1992, 53-56, Seiten 754-762), Aluminiumoxid-Titandioxid-Kaliumoxid-Systeme und KASICON (K+ super ionic conductor), deren Zusammensetzung im Detail in "M. Lejeune et al., *J. Non-Cryst. Solids,* 1982, *51*, Seiten 273-276" beschrieben ist. Bevorzugt werden Kalium-β"-Aluminiumoxid, Kalium-β-Aluminiumoxid oder Kalium-β/β"-Aluminiumoxid verwendet, die ausgehend von Natrium-β"-Aluminiumoxid, Natrium-β-Aluminiumoxid bzw. Natrium-β/β"-Aluminiumoxid durch Kationenaustausch hergestellt werden können.

Bei der Herstellung von Lithium kommen ebenfalls eine Vielzahl von Materialien in Frage. Insbesondere kommen keramische Materialien oder Gläser in Betracht.

Insbesondere sind zur Herstellung von Lithium nach dem erfindungsgemäßen Verfahren folgende Festelektrolyten geeignet:
1. Li-β"-Al₂O₃ oder Li-β-Al₂O₃, deren Herstellung aus Na-β"-Al₂O₃ bzw. aus Na-β-Al₂O₃ durch Austausch der Natriumionen gegen Lithiumionen möglich ist (O. Schäf, T. Widmer, U. Guth, *Ionics,* 1997, 3, Seiten 277-281).
2. Lithiumanaloga von NASICON-Keramiken, die aus einem [M₂(PO₄)₃]⁻-Netzwerk bestehen mit M = Zr, Ti, Ge, Hf. Diese haben die allgemeine Zusammensetzung Li₁₋ₓM₂₋ₓAₓ(PO₄)₃ oder Li₁₊ₓM₂₋ₓM'ₓ(PO₄)₃ mit M= Zr, Ti, Ge, Hf; A = Nb, Ta; In, Sc, Ga, Cr, Al (A. D. Robertson, A.R. West, A. G. Ritchie, *Solid State Ionics,* 1997, 104, Seiten 1-11 und dort zitierte Literatur).
3. LISICON's, die eine γ_{II}-Li₃PO₄-Struktur haben und die Zusammensetzung Li₂₊₂ₓZn₁₋ₓGeO₄ mit -0,36 < x < +087 oder Li₃₊ₓY₁₋ₓXₓO₄ mit X = Si, Ge, Ti und Y= P, V, Cr aufweisen (A. D. Robertson, A.R. West, A. G. Ritchie, *Solid State Ionics* 1997, 104, Seiten 1-11 und dort zitierte Literatur).
4. Lithiumionenleiter mit Perowskit-Struktur der allgemeinen Zusammensetzung Li_{0,5-3x}La_{0,5+x}TiO₃ bzw. Li_{0,5-3x}Ln_{0,5+x}TiO₃ (A. D. Robertson, A.R. West, A. G. Ritchie, *Solid State Ionics*, 1997, 104, Seiten 1-11 und dort zitierte Literatur, EP-A 0 835 951.
5. Sulfidische Gläser (R. Mercier, J. P. Malugani, B. Fahys, G. Robert, *Solid State Ionics,* 1981, 5, Seiten 663-666; US-A 4 465 746; S. Sahami, S. Shea, J. Kennedy, *J. Electrochem. Soc.,* 1985, 132, Seiten 985-986).

Bevorzugt sind jedoch Lithium-β"-Aluminiumoxid, Lithium-β-Aluminiumoxid und Lithium-β/β"-Aluminiumoxid, die jeweils ausgehend von Natrium-β"-Aluminiumoxid, Natrium-β-Aluminiumoxid bzw. Natrium-β/β"-Aluminiumoxid durch Kationenaustausch hergestellt werden können. Ebenso bevorzugt sind Lithiumanaloga von NASICON-Keramiken.

Demgemäß betrifft die vorliegende Erfindung auch eine Elektrolysezelle, wie oben beschrieben, die dadurch gekennzeichnet ist, daß
(a) das mindestens eine Alkalimetallsalz ein Lithiumsalz oder ein Gemisch aus zwei oder mehreren davon ist und der Festelektrolyt ausgewählt ist aus der Gruppe, bestehend aus Lithium-β-Aluminiumoxid, Lithium-β"-Aluminiumoxid, Lithium-β/β"-Aluminiumoxid und Lithiumanaloga von NASICON-Keramiken, oder daß
(b) das mindestens eine Alkalimetallsalz ein Natriumsalz oder ein Gemisch aus zwei oder mehreren davon ist und der Festelektrolyt ausgewählt ist aus der Gruppe, bestehend aus Natrium-β-Aluminiumoxid, Natrium-β"-Aluminiumoxid, Natrium-β/β"-Aluminiumoxid und NASICON-Keramiken, oder daß
(c) das mindestens eine Alkalimetallsalz ein Kaliumsalz oder ein Gemisch aus zwei oder mehreren davon ist und der Festelektrolyt ausgewählt ist aus der Gruppe, bestehend aus Kalium-β-Aluminiumoxid, Kalium-β"-Aluminiumoxid, Kalium-β/β"-Aluminiumoxid und Kaliumanaloga von NASICON-Keramiken.

Zweckmäßigerweise hat der Festelektrolyt die Form eines dünnwandigen aber dennoch druckfesten, einseitig geschlossenen Rohres (EP-B 0 424 673), an dessen offenem Ende ein elektrisch isolierender Ring mittels einer heliumdichten, ebenfalls elektrisch isolierenden Glaslotverbindung aufgebracht ist (GB 2 207 545, EP-B 0 482 785). Die Wandstärke des Alkalimetallionen leitenden Festelektrolyten liegt im allgemeinen im Bereich von 0,3 bis 5 mm, bevorzugt im Bereich von 1 bis 3 mm und besonders bevorzugt im Bereich von 1 bis 2 mm.

Die Querschnittsform des einseitig geschlossenen Rohres ist in der bevorzugten Ausführungsform kreisrund. Denkbar sind jedoch auch Querschnittsformen mit vergrößerter Oberfläche, die beispielsweise aus einem Verbund mehrerer kreisrunder Flächen abgeleitet werden können.

Wie bereits oben dargestellt, kommen in der Regel Festelektrolyte zum Einsatz, die bei einem Helium-Lecktest Leckraten von weniger als 10⁻⁹ (mbar • l)/s aufweisen, also im Rahmen der Nachweisgrenze heliumdicht sind. Die strengen Anforderungen bezüglich der Dichtigkeit ist unbedingt notwendig, da Sauerstoff und/oder Luftfeuchtigkeit in jedem Fall vom Alkalimetall ferngehalten werden müssen. Darüber hinaus ist es erforderlich, daß Alkalimetall und wäßrige Lösung voneinander getrennt werden, da ansonsten ein sicherer Betrieb der Elektrolysezelle bzw. eine sichere Durchführung des erfindungsgemäßen Verfahrens aufgrund der stark exothermen Reaktion zwischen Wasser und Feuchtigkeit einerseits und Alkalimetall andererseits nicht gewährleistet werden kann.

Die vorliegende Erfindung betrifft eine Elektrolysezelle, wie sie oben beschrieben wurde, die dadurch gekennzeichnet ist, daß die mindestens eine ionenleitende Schicht, die die mit dem Anodenkompartiment in Kontakt stehende Oberfläche des Festelektrolyten aufweist, ein Polymerelektrolyt (für Lithium: z. B. L. Kavan et al., *Chem. Rev.,* 1997, 97, Seiten 3061-3082 und dort zitierte Literatur; für Natrium: z. B. NAFION^{®} (ein Handelsname der Firma DuPont; darunter versteht man Ionenaustauschermembranen aus einem Tetrafluorethylen-Perfluorvinylethercopolymer mit Carbonsäuregruppen, wie dies beschrieben ist in "Ullmanns Enzyklopädie, 1999, Wiley-VCH")), ein keramischer Elektrolyt (Perowskitstrukturen für Li, Na, K; LISICON oder Lithiumanaloga von NASICON-Keramiken für Li; NASICON für Na; KASICON für K), eine Verbindung, die die Alkalimetallionen des mindestens einen Alkalimetallsalzes der wäßrigen Lösung des Anodenkompartiments interkaliert, oder ein Gemisch aus zwei oder mehreren davon ist.

In einer bevorzugten Ausführungsform betrifft die vorliegende Erfindung eine Elektrolysezelle, wie oben beschrieben, die dadurch gekennzeichnet ist, daß die mindestens eine ionenleitende Schicht, die die mit dem Kathodenkompartiment in Kontakt stehende Oberfläche des Festelektrolyten aufweist, ein Alkalimetallsalz, wobei das Alkalimetall gleich dem des Alkalimetallsalzes der wäßrigen Lösung des Anodenkompartiments ist, eine Verbindung, die die Alkalimetallionen des mindestens einen Alkalimetallsalzes der wäßrigen Lösung des Anodenkompartiments interkaliert, oder ein Gemisch aus zwei oder mehreren davon ist.

In einer weiter bevorzugten Ausführungsform betrifft die vorliegende Erfindung eine Elektrolysezelle, wie oben beschrieben, die dadurch gekennzeichnet ist, daß
(a) das mindestens eine Alkalimetallsalz der wäßrigen Lösung des Anodenkompartiments ein Lithiumsalz oder ein Gemisch aus zwei oder mehreren davon ist, und
   (aa) das Alkalimetallsalz, das die mit dem Kathodenkompartiment in Kontakt stehende Oberfläche des Festelektrolyten aufweist, ausgewählt ist aus der Gruppe, bestehend aus LiOH, LiNH₂, LiCl, LiBr, LiI, LiOR und einem Gemisch aus zwei oder mehreren davon,
   (bb) die Verbindung, die Lithiumionen interkaliert, z. B. Graphit, C₆Li, LiCoO₂, LiNiO₂, LiMnO₂ oder ein Gemisch davon ist, oder daß
(b) das mindestens eine Alkalimetallsalz der wäßrigen Lösung des Anodenkompartiments ein Natriumsalz oder ein Gemisch aus zwei oder mehreren davon ist und
   (aa) das Alkalimetallsalz, das die mit dem Kathodenkompartiment in Kontakt stehende Oberfläche des Festelektrolyten aufweist, ausgewählt ist aus der Gruppe, bestehend aus NaOH, NaNH₂, NaCl, NaBr, NaI, NaOR und einem Gemisch aus zwei oder mehreren davon,
   (bb) die Verbindung, die Natriumionen interkaliert, Graphit, C₈Na oder ein Gemisch davon ist, oder daß
(c) das mindestens eine Alkalimetallsalz der wäßrigen Lösung des Anodenkompartiments ein Kaliumsalz oder ein Gemisch aus zwei oder mehreren davon ist und
   (aa) das Alkalimetallsalz, das die mit dem Kathodenkompartiment in Kontakt stehende Oberfläche des Festelektrolyten aufweist, ausgewählt ist aus der Gruppe, bestehend aus KOH, KNH₂, KCl, KBr, KI, KOR und einem Gemisch aus zwei oder mehreren davon,
   (bb) die Verbindung, die Kaliumionen interkaliert, Graphit, CgK oder ein Gemisch davon ist,
wobei der Rest R für einen geradkettigen oder verzweigtkettigen Alkylrest mit 1 bis 5 Kohlenstoffatomen steht.

Die Alkalimetallsalze MOH, MNH₂, MCl, MBr, MI, MOR, wobei M für Li, Na oder K steht, können im Rahmen des erfindungsgemäßen Verfahrens nach allen denkbaren und geeigneten Verfahren gemäß dem Stand der Technik auf den Fest-elektrolyten aufgebracht werden. In bevorzugten Ausführungsformen werden diese Salze in Form einer Schmelze, einer wäßrigen Lösung oder einer alkoholischen Lösung auf den Festelektrolyten aufgebracht.

Demgemäß betrifft die vorliegende Erfindung auch ein Verfahren, wie oben beschrieben, das dadurch gekennzeichnet ist, daß der Teil der Oberfläche des Festelektrolyten, der mit dem Kathodenkompartiment in Kontakt steht, konditioniert wird, wobei das zur Konditionierung verwendete mindestens eine Alkalimetallsalz LiOH, LiNH₂, LiCl, LiBr, LiI, LiOR oder ein Gemisch aus zwei oder mehreren davon oder NaOH, NaNH₂, NaCl, NaBr, NaI, NaOR oder ein Gemisch aus zwei oder mehreren davon oder KOH, KNH₂, KCl, KBr, KI, KOR oder ein Gemisch aus zwei oder mehreren davon als Salzschmelze oder/und wäßrige Lösung oder/und alkoholische Lösung eingesetzt wird.

Selbstverständlich ist es im Rahmen des erfindungsgemäßen Verfahrens möglich, die Konditionierung auch in zwei oder mehreren aufeinanderfolgenden Schritten durchzuführen, wobei die mindestens eine chemische Verbindung oder das Gemisch aus zwei oder mehreren davon in den einzelnen Konditionierungsschritten gleich oder unterschiedlich sein kann.

Im Rahmen der vorliegenden Erfindung ist es möglich, daß diejenige Oberfläche des Festelektrolyten, die mit dem Anodenkompartiment in Kontakt steht, und gegebenenfalls diejenige Oberfläche des Festelektrolyten, die mit dem Kathodenkompartiment in Kontakt steht, mindestens eine der genannten ionenleitenden Schichten, wie sie oben beschrieben wurden, aufweist. In einer bevorzugten Ausführungsform weisen jedoch beide Oberflächen mindestens eine der genannten ionenleitenden Schichten auf. Wenn im Rahmen der vorliegenden Anmeldung von den "beiden" Oberflächen die Rede ist, sind nicht "zwei" Oberflächen im Sinne der Zahl 2, sondern zwei Arten von Oberflächen gemeint, die sich darin unterscheiden, mit welchem Kompartiment der Elektrolysezelle sie in Kontakt stehen. Vom Begriff der "beiden" Oberflächen wird also beispielsweise eine Bauart der erfindungsgemäßen Zelle umfaßt, in der beispielsweise zwei Oberflächenabschnitte des Festelektrolyten mit beispielsweise dem Anodenkompartiment in Kontakt stehen und ein Oberflächenabschnitt des Festelektrolyten mit dem Kathodenkompartiment in Kontakt steht.

In Abhängigkeit davon, welches Alkalimetall nach dem erfindungsgemäßen Verfahren hergestellt werden soll, besteht die Kathode aus unterschiedlichen Materialien.

In einer bevorzugten Ausführungsform besteht die Kathode aus dem Alkalimetall, das nach dem erfindungsgemäßen Verfahren hergestellt werden soll.

Die Umsetzungstemperatur wird im Rahmen des erfindungsgemäßen Verfahrens so hoch wie möglich gewählt, wobei die Temperaturgrenze im Anodenkompartiment durch die Siedetemperaturen der eingesetzten wäßrigen Lösung des Alkalimetallsalzes beim gewählten Druck bestimmt werden. Im Kathodenkompartiment werden ebenfalls Temperaturen gewählt, die so hoch wie möglich sind. Dabei werden Reaktionsdruck und -temperatur jeweils so gewählt, daß das in der bevorzugten Ausführungsform als Kathode verwendete Alkalimetall flüssig vorliegt.

Bei der Montage der Elektrolysezelle wird das Alkalimetall vorzugsweise in Form eines festen Reservoirs in das Anodenkompartiment eingebracht. Zu Beginn der Elektrolyse wird das Alkalimetall dann aufgeschmolzen. Das Alkalimetall kann aber auch in flüssiger Form zu Beginn der Elektrolyse in den Kathodenraum eingebracht werden.

Demgemäß betrifft die vorliegende Erfindung auch eine Elektrolysezelle, wie sie oben beschrieben wurde, die dadurch gekennzeichnet ist, daß
(a) das mindestens eine Alkalimetallsalz der wäßrigen Lösung des Anodenkompartiments ein Lithiumsalz oder ein Gemisch aus zwei oder mehreren davon ist und die Kathode aus Lithium besteht, oder
(b) das mindestens eine Alkalimetallsalz der wäßrigen Lösung des Anodenkompartiments ein Natriumsalz oder ein Gemisch aus zwei oder mehreren davon ist und die Kathode aus Natrium besteht, oder
(c) das mindestens eine Alkalimetallsalz der wäßrigen Lösung des Anodenkompartiments ein Kaliumsalz oder ein Gemisch aus zwei oder mehreren davon ist und die Kathode aus Kalium besteht.

In einer weiter bevorzugten Ausführungsform umfaßt das Kathodenkompartiment mindestens eine Kathode, die durch einen Flüssigelektrolyten von dem Festelektrolyten separiert wird.

Als Kathodenmaterial können in der erfindungsgemäßen Zelle im wesentlichen alle geeigneten Materialien dienen. Beispiele hierfür sind unter anderem etwa Stahl, Reinnickel mit beispielsweise der DIN-Werkstoffnummer 2.4066 oder Elektrodengraphit. In einer bevorzugten Ausgestaltungsform der erfindungsgemäßen Zelle ist die Kathode aus Stahl gefertigt.

Demgemäß betrifft die vorliegende Erfindung auch eine Elektrolysezelle, wie sie oben beschrieben wurde, die dadurch gekennzeichnet ist, daß die Kathode eine Stahlkathode ist und von dem Festelektrolyten durch einen Flüssigelektrolyten separiert wird.

Geeignete Stähle sind unter anderem etwa Edelstahl, austenitischer Stahl oder unlegierter Stahl. Als bevorzugte austenitische Stähle sind unter anderem die Stähle mit den DIN-Werkstoffnummern 1.4541 oder 1.4571 zu nennen, als bevorzugte unlegierte Stähle die Stähle mit den DIN-Werkstoffnummem 1.0305 oder 1.0346. In einer ganz besonders bevorzugten Ausführungsform der erfindungsgemäßen Elektrolysezelle werden unlegierte Stähle eingesetzt.

In einer weiter bevorzugten Ausführungsform ist die Kathode als Stab ausgebildet, der in den als Rohr ausgebildeten Festelektrolyten eingebaut ist. Vorzugsweise wird der Stab in der Weise eingebaut, daß zwischen dem Festelektrolyten und dem Stab ein Spalt mit einer Spaltweite im Bereich von 1 bis 6 mm entsteht.

Die Kathode kann in der erfindungsgemäßen Zelle selbstverständlich auch alle anderen geeigneten Geometrien aufweisen. Beispielsweise kann sie als Rohr, als Drahtnetz oder als Streckmetall ausgebildet sein.

An der festen Kathode entsteht im erfindungsgemäßen Verfahren das Alkalimetall. Dieses steigt an der gemäß der bevorzugten Ausführungsform als Stab ausgebildeten Kathode in dem Flüssigelektrolyten auf und kann als reine metallische Phase abgezogen werden.

Der Flüssigelektrolyt wird zweckmäßigerweise so gewählt, daß er gegenüber Alkalimetall stabil ist. Bevorzugt wird ein Flüssigelektrolyt eingesetzt, der sich bei der Elektrolysereaktion nicht verbraucht. In einer besonders bevorzugten Ausführungsform wird als Flüssigelektrolyt eine Elektrolytschmelze eingesetzt.

In einer bevorzugten Ausführungsform betrifft die vorliegende Erfindung daher eine Elektrolysezelle, wie sie oben beschrieben wurde, die dadurch gekennzeichnet ist, daß der Flüssigelektrolyt eine Elektrolytschmelze ist.

Je nachdem, welches Alkalimetall unter Verwendung der erfindungsgemäßen Elektrolysezelle hergestellt wird, werden zweckmäßigerweise unterschiedliche Elektrolytschmelzen als Flüssigelektrolyt eingesetzt. Bevorzugt werden in den erfindungsgemäßen Elektrolysezellen bei der Herstellung von Lithium eine LiOH-Schmelze, bei der Herstellung von Natrium NaOH-Schmelzen, NaNH₂-Schmelzen oder Gemische davon, bei der Herstellung von Kalium KOH-Schmelzen, KNH₂-Schmelzen oder Gemische davon eingesetzt.

Demgemäß betrifft die vorliegende Erfindung eine Eletrolysezelle, wie sie oben beschrieben wurde, die dadurch gekennzeichnet ist, daß
(a) das mindestens eine Alkalimetallsalz der wäßrigen Lösung des Anodenkompartiments ein Lithiumsalz oder ein Gemisch aus zwei oder mehreren davon ist und die Elektrolytschmelze eine LiOH-Schmelze ist, oder daß
(b) das mindestens eine Alkalimetallsalz der wäßrigen Lösung des Anodenkompartiments ein Natriumsalz oder ein Gemisch aus zwei oder mehreren davon ist und die Elektrolytschmelze ausgewählt ist aus der Gruppe bestehend aus einer NaOH-Schmelze, einer NaNH₂-Schmelze und einem Gemisch davon, oder daß
(c) das mindestens eine Alkalimetallsalz der wäßrigen Lösung des Anodenkompartiments ein Kaliumsalz oder ein Gemisch aus zwei oder mehreren davon ist und die Elektrolytschmelze ausgewählt ist aus der Gruppe bestehend aus einer KOH-Schmelze, einer KNH₂-Schmelze und einem Gemisch davon.

In einer besonders bevorzugten Ausführungsform werden diese Schmelzen oder deren Gemische in wasserfreier Form eingesetzt. In einer weiter besonders bevorzugten Ausführungsform werden als Eletrolytschmelzen Gemische und besonders bevorzugt wasserfreie Gemische eingesetzt. Darunter sind eutektische Gemische bevorzugt.

Selbstverständlich ist es denkbar, den Flüssigelektrolyten mit einem oder mehreren geeigneten Zusätzen zu versetzen. Als Beispiele sind unter anderem schmelzpunkterniedrigende Zusätze zu nennen. Prinzipiell sind sämtliche schmelzpunkterniedrigenden Zusätze geeignet, die den erfindungsgemäßen Einsatz der Elektrolysezelle und das erfindungsgemäße Verfahren nicht stören. Bevorzugt werden schmelzpunkterniedrigende Zusätze, die bei der Herstellung von Lithium ausgewählt werden aus der Gruppe, bestehend aus LiI, LiBr, Li₂CO₃ und einem Gemisch aus zwei oder mehreren davon, bei der Herstellung von Natrium ausgewählt werden aus der Gruppe, bestehend aus NaI, NaBr, Na₂CO₃ und einem Gemisch aus zwei oder mehreren davon und bei der Herstellung von Kalium ausgewählt aus der Gruppe, bestehend aus KI, KBr, K₂CO₃ und einem Gemisch aus zwei oder mehreren davon.

Ferner betrifft die vorliegende Erfindung auch ein elektrochemisches Verfahren, wie es oben beschrieben wurde, das dadurch gekennzeichnet ist, daß die wäßrige Lösung des mindestens einen Alkalimetallsalzes aus Alkalimetallabfällen gewonnen wird.

Beispielsweise fallen bei lithiumorganischen Reaktionen in nennenswerter Menge Lithiumhalogenide in Form von wäßrigen Lösungen an. Aus Lithiumionen-Batterien können ebenfalls wäßrige Lösungen verschiedener Lithiumsalze wie beispielsweise Lithiumhalogenide, Lithiumsulfat, Lithiumsulfonate oder Lithiumsalze organischer Säuren wiedergewonnen, beispielsweise herausgelöst, werden. Eine weitere Möglichkeit der Wiedergewinnung von derartigen Lithiumsalz-Lösungen bietet der saure Aufschluß der in Batterien verwendeten Elektrolyten und Elektroden mit beispielsweise Salzsäure oder Schwefelsäure. Die Lithiumabfälle werden in einer bevorzugten Ausführungsform z. B. mittels Salzsäure in eine wäßrige Lithiumchloridlösung überführt.

## Patentansprüche

1. Elektrolysezelle, umfassend ein Anodenkompartiment, das eine wäßrige Lösung mindestens eines Alkalimetallsalzes umfaßt, ein Kathodenkompartiment und einen Festelektrolyten, durch den das Anodenkompartiment und das Kathodenkompartiment voneinander separiert werden, **dadurch gekennzeichnet, daß** der Teil der Oberfläche des Festelektrolyten, der mit dem Anodenkompartiment und gegebenenfalls der Teil der Oberfläche des Festelektrolyten, der mit dem Kathodenkompartiment in Kontakt steht, mindestens eine weitere ionenleitende Schicht aufweist, wobei die mindestens eine ionenleitende Schicht, die die mit dem Anodenkompartiment in Kontakt stehende Oberfläche des Festelektrolyten aufweist, ein Polymerelektrolyt, ein keramischer Elektrolyt, eine Verbindung, die die Alkalimetallionen des mindestens einen Alkalimetallsalzes interkaliert, oder ein Gemisch aus zwei oder mehreren davon ist.

2. Elektrolysezelle nach Anspruch 1, **dadurch gekennzeichnet, daß**
(a) das mindestens ein Alkalimetallsalz ein Lithiumsalz oder ein Gemisch aus zwei oder mehreren davon ist und der Festelektrolyt ausgewählt ist aus der Gruppe, bestehend aus Lithium-β-Aluminiumoxid, Lithium-β"-Aluminiumoxid, Lithium-β/β"-Aluminiumoxid, Lithiumanaloga von NASICON-Keramiken, LISICON's und Li-Ionenleiter mit Perowksi-Struktur, oder daß
(b) das mindestens eine Alkalimetallsalz ein Natriumsalz oder ein Gemisch aus zwei oder mehreren davon ist und der Festelektrolyt ausgewählt ist aus der Gruppe, bestehend aus Natrium-β-Aluminiumoxid, Natrium-β"-Aluminiumoxid, Natrium-β/β"-Aluminiumoxid und NASICON-Keramiken, oder daß
(c) das mindestens eine Alkalimetallsalz ein Kaliumsalz oder ein Gemisch aus zwei oder mehreren davon ist und der Festelektrolyt ausgewählt ist aus der Gruppe, bestehend aus Kalium-β-Aluminiumoxid, Kalium-β"-Aluminiumoxid, Kalium-β/β"-Aluminiumoxid und Kaliumanaloga von NASICON-Keramiken.

3. Elektrolysezelle nach Anspruch 1 oder 2, **dadurch gekennzeichnet, daß** die mindestens eine ionenleitende Schicht, die die mit dem Kathodenkompartiment in Kontakt stehende Oberfläche des Festelektrolyten aufweist, ein Alkalimetallsalz, wobei das Alkalimetall gleich dem des Alkalimetallsalzes nach Anspruch 1 ist, eine Verbindung, die die Alkalimetallionen des mindestens einen Alkalimetallsalzes nach Anspruch 1 interkaliert, oder ein Gemisch aus zwei oder mehreren davon ist.

4. Elektrolysezelle nach Anspruch 3, **dadurch gekennzeichnet, daß**
(a) das mindestens eine Alkalimetallsalz nach Anspruch 1 ein Lithiumsalz oder ein Gemisch aus zwei oder mehreren davon ist, und
(aa) das Alkalimetallsalz, das die mit dem Kathodenkompartiment in Kontakt stehende Oberfläche des Festelektrolyten aufweist, ausgewählt ist aus der Gruppe, bestehend aus LiOH, LiNH₂, LiCl, LiBr, LiI, LiOR und einem Gemisch aus zwei oder mehreren davon,
(bb) die Verbindung, die Lithiumionen interkaliert, Graphit, C₆Li oder ein Gemisch davon ist, oder daß
(b) das mindestens eine Alkalimetallsalz nach Anspruch 1 ein Natriumsalz oder ein Gemisch aus zwei oder mehreren davon ist, und
(aa) das Alkalimetallsalz, das die mit dem Kathodenkompartiment in Kontakt stehende Oberfläche des Festelektrolyten aufweist, ausgewählt ist aus der Gruppe, bestehend aus NaOH, NaNH₂, NaCl, NaBr, NaI, NaOR und einem Gemisch aus zwei oder mehreren davon,
(bb) die Verbindung, die Natriumionen interkaliert, Graphit, C₈Na oder ein Gemisch davon ist, oder daß
(c) das mindestens eine Alkalimetallsalz nach Anspruch 1 ein Kaliumsalz oder ein Gemisch aus zwei oder mehreren davon ist und
(aa) das Alkalimetallsalz, das die mit dem Kathodenkompartiment in Kontakt stehende Oberfläche des Festelektrolyten aufweist, ausgewählt ist aus der Gruppe, bestehend aus KOH, KNH₂, KCl, KBr, KI, KOR und einem Gemisch aus zwei oder mehreren davon,
(bb) die Verbindung, die Kaliumionen interkaliert, Graphit, C₈K oder ein Gemisch davon ist,
wobei der Rest R für einen geradkettigen oder verzweigtkettigen Alkylrest mit 1 bis 5 Kohlenstoffatomen steht.

5. Elektrolysezelle nach einem der Ansprüche 1 bis 4, **dadurch gekennzeichnet, daß**
(a) das mindestens eine Alkalimetallsalz nach Anspruch 1 ein Lithiumsalz oder ein Gemisch aus zwei oder mehreren davon ist und die Kathode aus Lithium besteht, oder daß
(b) das mindestens eine Alkalimetallsalz nach Anspruch 1 ein Natriumsalz oder ein Gemisch aus zwei oder mehreren davon ist und die Kathode aus Natrium besteht, oder daß
(c) das mindestens eine Alkalimetallsalz nach Anspruch 1 ein Kaliumsalz oder ein 5 Gemisch aus zwei oder mehreren davon ist und die Kathode aus Kalium besteht.

6. Elektrolysezelle nach einem der Ansprüche 1 bis 5, **dadurch gekennzeichnet, daß** die Kathode eine Stahlkathode ist und von dem Festelektrolyten durch einen Flüssigelektrolyten, vorzugsweise eine Elektrolytschmelze, separiert wird.

7. Elektrolysezelle nach Anspruch 6, **dadurch gekennzeichnet, daß**
(a) das mindestens eine Alkalimetallsalz nach Anspruch 1 ein Lithiumsalz oder ein Gemisch aus zwei oder mehreren davon ist und die Elektrolytschmelze eine LiOH-Schmelze ist, oder daß
5 (b) das mindestens eine Alkalimetallsalz nach Anspruch 1 ein Natriumsalz oder ein Gemisch aus zwei oder mehreren davon ist und die Elektrolytschmelze ausgewählt ist aus der Gruppe, bestehend aus einer NaOH-Schmelze, einer NaNH₂-Schmelze und einem Gemisch davon, oder daß
(c) das mindestens eine Alkalimetallsalz nach Anspruch 1 ein Kaliumsalz oder ein Gemisch aus zwei oder mehreren davon ist und die Elektrolytschmelze ausgewählt ist aus der Gruppe, bestehend aus einer KOH-Schmelze, einer KNH₂₋Schmelze und einem Gemisch davon.

8. Verfahren zur Herstellung eines Alkalimetalls aus einer wäßrigen Lösung, umfassend mindestens ein Salz dieses Alkalimetalls, unter Verwendung einer Elektrolysezelle gemäß einem der Ansprüche 1 bis 7.

9. Verfahren nach Anspruch 8, **dadurch gekennzeichnet, daß** die wäßrige Lösung des mindestens einen Alkalimetallsalzes aus Alkalimetallabfällen gewonnen wird, insbesondere dass eine wäßrige Lösung eines Lithiumsalzes aus Lithiumabfällen gewonnen wird.

## Claims

1. An electrolysis cell comprising an anode compartment which comprises an aqueous solution of at least one alkali metal salt, a cathode compartment and a solid electrolyte which separates the anode compartment and the cathode compartment from one another, wherein that part of the surface of the solid electrolyte which is in contact with the anode compartment and, if appropriate, that part of the surface of the solid electrolyte which is in contact with the cathode compartment has/have at least one further ion-conducting layer, where the at least one ion-conducting layer which relates to that surface of the solid electrolyte which is in contact with the anode compartment is a polymer electrolyte, a ceramic electrolyte, a compound which intercalates the alkali metal ions of the at least one alkali metal salt, or a mixture made from two or more of these.

2. The electrolysis cell according to claim 1, wherein
(a) the at least one alkali metal salt is a lithium salt or a mixture made from two or more of these, and the solid electrolyte has been selected from the group consisting of lithium-β-aluminum oxide, lithium-β"-aluminum oxide, lithium-β/β"-aluminum oxide, lithium analogs of NASICON ceramics, LISICONs and Li-ion conductors with perovskite structure, or
(b) the at least one alkali metal salt is a sodium salt or a mixture made from two or more of these, and the solid electrolyte has been selected from the group consisting of sodium-β-aluminum oxide, sodium-β"-aluminum oxide, sodium-β/β"-aluminum oxide, and NASICON ceramics, or
(c) the at least one alkali metal salt is a potassium salt or a mixture made from two or more of these, and the solid electrolyte has been selected from the group consisting of potassium-β-aluminum oxide, potassium-β"-aluminum oxide, potassium-β/β"-aluminum oxide and potassium analogs of NASICON ceramics.

3. The electrolysis cell according to claim 1 or 2, wherein the at least one ion-conducting layer which relates to that surface of the solid electrolyte which is in contact with the cathode compartment is an alkali metal salt, where the alkali metal is identical with that of the alkali metal salt according to claim 1, a compound which intercalates the alkali metal ions of the at least one alkali metal salt according to claim 1, or a mixture made from two or more of these.

4. An electrolysis cell according to claim 4, wherein
(a) the at least one alkali metal salt according to claim 1 is a lithium salt or a mixture made from two or more of these, and
(aa) the alkali metal salt which relates to that surface of the solid electrolyte which is in contact with the cathode compartment has been selected from the group consisting of LiOH, LiNH₂, LiCl, LiBr, LiI, LiOR and a mixture made from two or more of these,
(bb) the compound which intercalates lithium ions is graphite, C₆Li or a mixture of these, or
(b) the at least one alkali metal salt according to claim 1 is a sodium salt or a mixture made from two or more of these, and
(aa) the alkali metal salt which relates to that surface of the solid electrolyte which is in contact with the cathode compartment has been selected from the group consisting of NaOH, NaNH₂, NaCl, NaBr, NaI, NaOR and a mixture made from two or more of these,
(bb) the compound which intercalates sodium ions is graphite, C₈Na or a mixture of these, or
(c) the at least one alkali metal salt according to claim 1 is a potassium salt or a mixture made from two or more of these, and
(aa) the alkali metal salt which relates to that surface of the solid electrolyte which is in contact with the cathode compartment has been selected from the group consisting of KOH, KNH₂, KCl, KBr, KI, KOR and a mixture made from two or more of these,
(bb) the compound which intercalates potassium ions is graphite, C₈K or a mixture of these,
where R is straight-chain or branched-chain alkyl having from 1 to 5 carbon atoms.

5. The electrolysis cell according to any one of claims 1 to 4, wherein
(a) the at least one alkali metal salt according to claim 1 is a lithium salt or a mixture made from two or more of these, and the cathode is composed of lithium, or
(b) the at least one alkali metal salt according to claim 1 is a sodium salt or a mixture made from two or more of these, and the cathode is composed of sodium, or
(c) the at least one alkali metal salt according to claim 1 is a potassium salt or a mixture made from two or more of these and the cathode is composed of potassium.

6. The electrolysis cell according to any one of claims 1 to 5, wherein the cathode is a steel cathode and is separated from the solid electrolyte by a liquid electrolyte, preferably an electrolyte melt.

7. The electrolysis cell according to claim 6, wherein
(a) the at least one alkali metal salt according to claim 1 is a lithium salt or a mixture made from two or more of these, and the electrolyte melt is an LiOH melt, or
(b) the at least one alkali metal salt according to claim 1 is a sodium salt or a mixture made from two or more of these and the electrolyte melt has been selected from the group consisting of an NaOH melt, an NaNH₂ melt and a mixture of these, or
(c) the at least one alkali metal salt according to claim 1 is a potassium salt or a mixture made from two or more of these and the electrolyte melt has been selected from the group consisting of a KOH melt, a KNH₂ melt and a mixture of these.

8. The process for preparing an alkali metal from an aqueous solution comprising at least one salt of this alkali metal, using an electrolysis cell according to any one of claims 1 to 7.

9. A process according to claim 8, wherein the aqueous solution of the at least one alkali metal salt is obtained from alkali metal waste, in particular wherein an aqueous solution of a lithium salt is obtained from lithium waste.

## Revendications

1. Cellule électrolytique comprenant un compartiment anodique qui comprend une solution aqueuse d'au moins un sel de métal alcalin, un compartiment cathodique et un électrolyte solide par lequel le compartiment anodique et le compartiment cathodique sont séparés l'un de l'autre, **caractérisée en ce que** la partie de la surface de l'électrolyte solide qui est en contact avec le compartiment anodique et éventuellement la partie de la surface de l'électrolyte solide qui est en contact avec le compartiment cathodique présentent au moins une autre couche conductrice d'ions, la au moins une couche conductrice d'ions, qui présente la surface de l'électrolyte solide en contact avec le compartiment anodique, étant un électrolyte polymère, un électrolyte céramique, un composé qui intercale les ions du métal alcalin du au moins un sel de métal alcalin, ou un mélange de deux de ces substances ou plus.

2. Cellule électrolytique selon la revendication 1, **caractérisée en ce que**
(a) le au moins un sel de métal alcalin est un sel de lithium ou un mélange de deux sels ou plusieurs d'entre eux et l'électrolyte solide est choisi dans le groupe constitué de l'oxyde de lithium-β-aluminium, de l'oxyde de lithium-β"-aluminium, de l'oxyde de lithium-β/β"-aluminium, d'analogues du lithium de céramiques NASICON, de LISICON et de conducteurs d'ions de Li à structure de Perowski, ou **en ce que**
(b) le au moins un sel de métal alcalin est un sel de sodium ou un mélange de deux ou plusieurs d'entre eux et l'électrolyte solide est choisi dans le groupe constitué de l'oxyde de sodium-β-aluminium, de l'oxyde de sodium-β"-aluminium, de l'oxyde de sodium-β/β"-aluminium et de céramiques NASICON, ou **en ce que**
(c) le au moins un sel de métal alcalin est un sel de potassium ou un mélange de deux ou plusieurs d'entre eux et l'électrolyte solide est choisi dans le groupe constitué de l'oxyde de potassium-β-aluminium, de l'oxyde de potassium-β"-aluminium, de l'oxyde de potassium-β/β"-aluminium et d'analogues de potassium de céramiques NASICON.

3. Cellule électrolytique selon la revendication 1 ou 2, **caractérisée en ce que** la au moins une couche conductrice d'ions, qui présente la surface de l'électrolyte solide en contact avec le compartiment cathodique, est un sel de métal alcalin, le métal alcalin étant identique à celui du sel de métal alcalin selon la revendication 1, un composé qui intercale les ions du métal alcalin du au moins un sel de métal alcalin selon la revendication 1, ou un mélange de deux de ces substances ou plus.

4. Cellule électrolytique selon la revendication 3, **caractérisée en ce que**
(a) le au moins un sel de métal alcalin selon la revendication 1 est un sel de lithium ou un mélange de deux ou plusieurs d'entre eux, et
(aa) le sel de métal alcalin, qui présente la surface de l'électrolyte solide en contact avec le compartiment cathodique, est choisi dans le groupe constitué de LiOH, LiNH₂, LiCl, LiBr, LiI, LiOR et d'un mélange de deux de ces substances ou plus,
(bb) le composé qui intercale des ions lithium, est le graphite, C₆Li ou un mélange de ces substances, ou **en ce que**
(b) le au moins un sel de métal alcalin selon la revendication 1 est un sel de sodium ou un mélange de deux ou plusieurs d'entre eux, et
(aa) le sel de métal alcalin, qui présente la surface de l'électrolyte solide en contact avec le compartiment cathodique, est choisi dans le groupe constitué de NaOH, NaNH₂, NaCl, NaBr, NaI, NaOR et d'un mélange de deux de ces substances ou plus,
(bb) le composé qui intercale des ions sodium, est le graphite, C₈Na ou un mélange de ces substances, ou en ce que
(c) le au moins un sel de métal alcalin selon la revendication 1 est un sel de potassium ou un mélange de deux ou plusieurs d'entre eux, et
(aa) le sel de métal alcalin, qui présente la surface de l'électrolyte solide en contact avec le compartiment cathodique, est choisi dans le groupe constitué de KOH, KNH₂, KCl, KBr, KI, KOR et d'un mélange de deux de ces substances ou plus,
(bb) le composé, qui intercale des ions potassium, est le graphite, C₈K ou un mélange de ces substances,
où le radical R représente un radical alkyle à chaîne droite ou ramifiée avec 1 à 5 atomes de carbone.

5. Cellule électrolytique selon l'une quelconque des revendications 1 à 4, **caractérisée en ce que**
(a) le au moins un sel de métal alcalin selon la revendication 1 est un sel de lithium ou un mélange de deux ou plusieurs d'entre eux et la cathode est constituée de lithium,
ou **en ce que**
(b) le au moins un sel de métal alcalin selon la revendication 1 est un sel de sodium ou un mélange de deux ou plusieurs d'entre eux et la cathode est constituée de sodium, ou **en ce que**
(c) le au moins un sel de métal alcalin selon la revendication 1 est un sel de potassium ou un mélange de deux ou plusieurs d'entre eux et la cathode est constituée de potassium.

6. Cellule électrolytique selon l'une quelconque des revendications 1 à 5, **caractérisée en ce que** la cathode est une cathode en acier et est séparée de l'électrolyte solide par un électrolyte liquide, de préférence une masse fondue d'électrolyte.

7. Cellule électrolytique selon la revendication 6, **caractérisée en ce que**
(a) le au moins un sel de métal alcalin selon la revendication 1 est un sel de lithium ou un mélange de deux ou plusieurs d'entre eux et la masse fondue d'électrolyte est une masse fondue de LiOH, ou **en ce que**
(b) le au moins un sel de métal alcalin selon la revendication 1 est un sel de sodium ou un mélange de deux ou plusieurs d'entre eux et la masse fondue d'électrolyte est choisie dans le groupe constitué d'une masse fondue de NaOH, d'une masse fondue de NaNH₂ et d'un de leurs mélanges, ou **en ce que**
(c) le au moins un sel de métal alcalin selon la revendication 1 est un sel de potassium ou un mélange de deux ou plusieurs d'entre eux et la masse fondue d'électrolyte est choisie dans le groupe constitué d'une masse fondue de KOH, d'une masse fondue de KNH₂ et d'un de leurs mélanges.

8. Procédé de fabrication d'un métal alcalin à partir d'une solution aqueuse comprenant au moins un sel de ce métal alcalin, en utilisant une cellule électrolytique selon l'une quelconque des revendications 1 à 7.

9. Procédé selon la revendication 8, **caractérisé en ce que** la solution aqueuse du au moins un sel de métal alcalin est obtenue à partir de déchets de métaux alcalins, en particulier **en ce qu'**une solution aqueuse d'un sel de lithium est obtenue à partir de déchets de lithium.
